# EUROPEAN PATENT SPECIFICATION

(11) **EP 4 147 900 B1**
(45) Date of publication and mention of the grant of the patent: **04.11.2026**
(21) Application number: 22194099.2
(22) Date of filing: 06.09.2022
(51) Int. Cl.: B60L 15/20, B60K 1/02

(54) **METHOD FOR MANAGING AN ELECTRIC PROPULSION SYSTEM AND ELECTRIC PROPULSION SYSTEM IMPLEMENTING THE METHOD**
VERFAHREN ZUR VERWALTUNG EINES ELEKTRISCHEN ANTRIEBSSYSTEMS UND VERFAHREN ZUR IMPLEMENTIERUNG DIESES ELEKTRISCHEN ANTRIEBSSYSTEMS
MÉTHODE DE GESTION D'UN SYSTÈME DE PROPULSION ÉLECTRIQUE ET PROCÉDÉ DE MISE EN OEUVRE DE CE SYSTÈME DE PROPULSION ÉLECTRIQUE

(30) Priority: 08.09.2021 IT 202100023243
(43) Date of publication of application: 15.03.2023
(73) Proprietor: FPT Industrial S.p.A., 10156 Torino (IT)
(72) Inventor: NUDDA, Niccolò, 10156 Torino (IT); CONTARDI, Mattia, 10156 Torino (IT)
(74) Representative: Fiume, Orazio

(56) References cited:
- EP-A1- 1 518 735
- WO-A1-2021/148260
- DE-A1- 102011 056 929
- DE-A1- 102011 088 647
- DE-A1- 102015 215 393

## Description

### Field of the invention

The present invention relates to the field of electric propulsion systems, in particular in the field of industrial and commercial vehicles.

### State of the art

In the field of commercial and industrial vehicles, massive electrification is underway which sees the replacement of internal combustion motors with electric motors.

However, electric motors have very different characteristics compared to internal combustion motors. Therefore, it is necessary to provide for dedicated control strategies in order to guarantee mileage, robustness and performance adequate for the purposes.

DE 10 2015 215393 A1, DE 10 2011 088647 A1 or DE 10 2011 056929 A1 disclose examples of electric propulsion systems with two propulsion lines in parallel, each propulsion line comprising an electric motor, a gearbox and a clutch.

### Summary of the invention

The purpose of the present invention is to present a method of managing a propulsion system and a propulsion system that are improvements or alternatives to the known art.

The present invention is based on a propulsion system comprising two parallel propulsion lines, which converge on the same driving axle. Each propulsion line comprises, in succession, an electric motor, a gearbox and a clutch.

The expression "driving axle" means "pair of wheels having respective rotation shafts coaxial with each other".

The control of a first propulsion line is independent of the second propulsion line, so that while, for example, the first line is operational, the second can be deactivated or can operate differently from the first line.

Depending on the torque required from the propulsion system and vehicle speed, a processing unit distributes the torque between the propulsion lines.

According to a preferred operating mode of the invention, when the required torque is lower than a predetermined threshold, a propulsion line is deactivated.

According to another aspect of the invention, a load balance between the two propulsion lines is envisaged, in order to ensure fair wear of the propulsion lines.

The dependent claims describe preferred embodiments of the invention, forming an integral part of the present description.

### Brief description of the figures

Further objects and advantages of the present invention will become clear from the following detailed description of an example of its embodiment (and its variants) and from the attached drawings given purely for explanatory and non-limiting purposes, in which:
Figs. 1 and 2 show transmission ratio selection diagrams in relation to vehicle speed and required percentage torque;
Fig. 3 shows a diagram of distribution of the torque required between the motors of the two propulsion lines;
Fig. 4 schematically illustrates the propulsion system according to the present invention;
Fig. 5 schematically shows the propulsion system of Figure 4 with an indication also of the logic functions realized by means of the diagrams of Figs. 1 - 3;
Fig. 6 shows a flow chart for generating the diagrams of Figs. 1 - 3.

The same reference numbers and letters in the figures identify the same elements or components or functions.

It should also be noted that the terms "first", "second", "third", "upper", "lower" and the like can be used here to distinguish various elements. These terms do not imply a spatial, sequential or hierarchical order for the modified elements unless specifically indicated or inferred from the text.

The elements and features illustrated in the various preferred embodiments, including the drawings, can be combined with each other without however departing from the scope of this application as described below.

### Detailed description of preferred embodiments

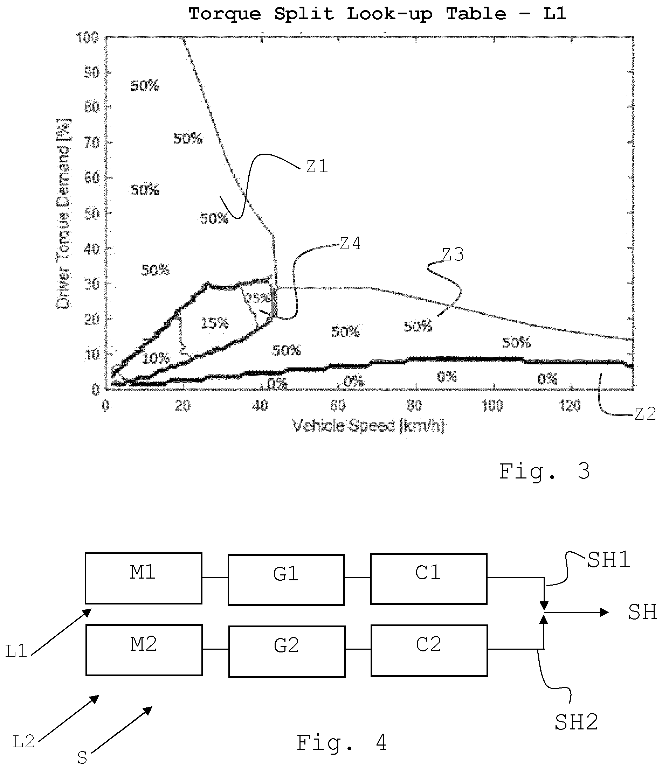

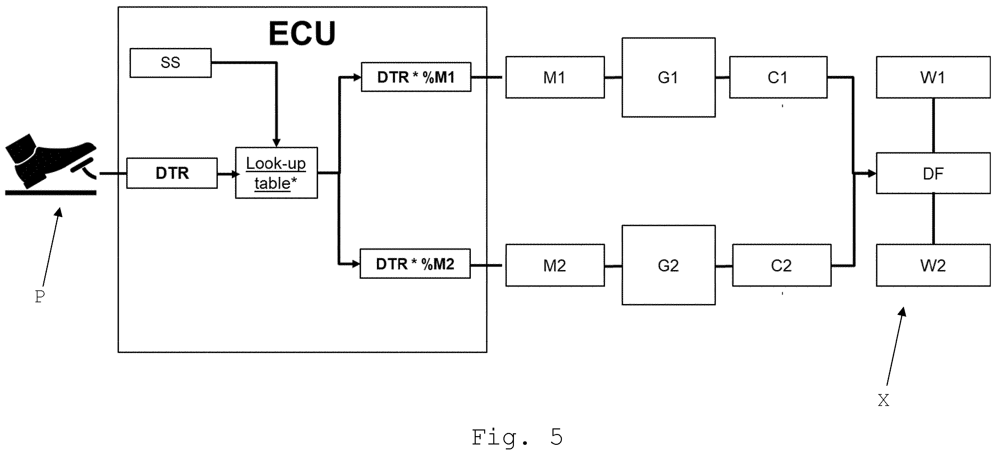

With reference to Figures 4 and 5, a propulsion system according to the present invention is shown.

The system includes two propulsion lines L1 and L2.

Each propulsion line includes an electric motor-generator M1, M2, a gearbox G1, G2 and a clutch C1, C2.

Hereinafter, for convenience, the term "motor" refers to an "electric motor generator".

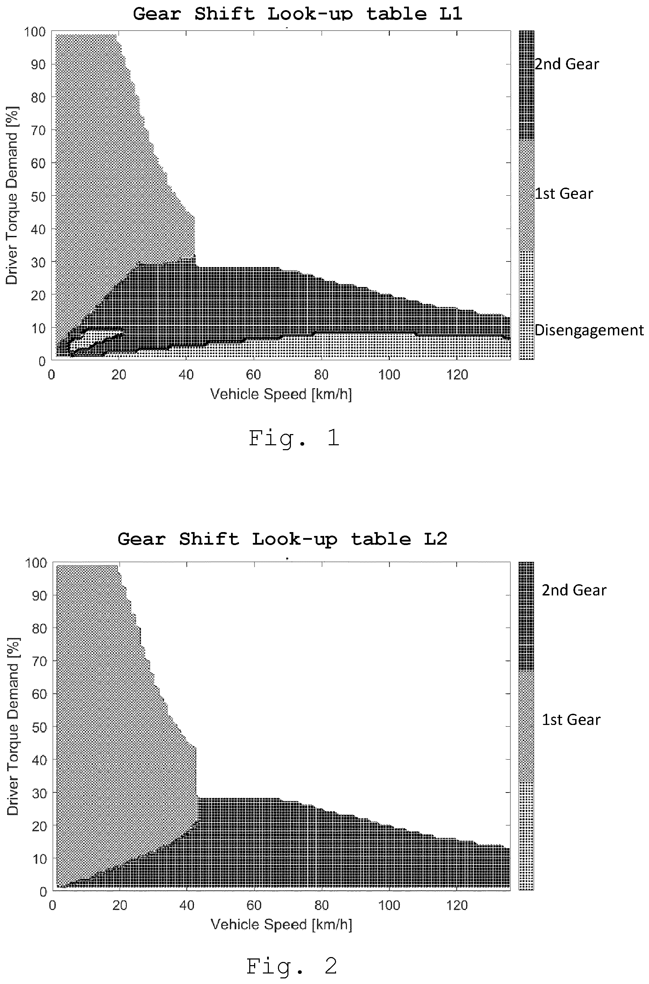

The gearbox G1, G2 is preferably with discrete ratios and preferably comprises two transmission ratios, indicated in Figures 1 and 2 with "1st Gear" and "2nd Gear", indicating the first and second gear respectively.

Preferably, the coupling C1, C2 is made by means of a dog clutch that can be controlled in order to connect or disconnect the respective propulsion line from the driving axle X indicated in figure 5.

However, the clutch can be integrated into a gearbox capable of interrupting the connection with the driving axle X as well as selectively selecting a gear ratio between two or among more gear ratios.

Figure 1 also provides for a condition in which the first line L1 is completely disconnected from the driving axle X. This disconnection condition is indicated in Figure 1 with the label "Disengagement". In Figure 3, this disconnection condition is indicated with 0% zero torque delivery.

The diagrams in figures 1 - 3 show areas in the Cartesian plane as a function of the vehicle speed "Vehicle speed" and the torque required "Driver Torque Demand" to the propulsion system. For example, if the maximum torque that each propulsion line can provide is 900Nm and the driver requires 70% of the maximum torque, then the torque delivered by the propulsion system is 1800 * 0.7 = 1260Nm.

It is evident that the vehicle speed and the rotation speed of the driving axle X are equivalent to less than a fixed gear ratio. Therefore, it is indifferent to talk about one or the other in the following description.

In Figures 1 and 2, the areas are hatched so that each point belonging to the same areas indicates the feasible transmission ratio.

The two diagrams of figures 1 and 2 are very similar to each other and have a vertical area, very close to the ordinate axis, in which the first transmission ratio is engaged and a horizontal area, very close to the abscissa axis, in which the activation of the second transmission ratio is foreseen. The first diagram differs from the second in that it includes a third area, contiguous with the abscissa axis, according to which the disconnection of the related propulsion line is expected.

Observing the diagrams of figures 1 and 2 simultaneously, so it can be understood, for example, that for a vehicle speed up to 40 km/h and for torque required greater than 30% of the maximum deliverable torque, the first L1 and the second L2 propulsion line provide for the use of the same transmission ratio, that is to say the first gear.

Similarly, when the required torque is greater than 10% and the vehicle speed is greater than 40 km/h, the two propulsion lines adopt the same transmission ratio, i.e. second gear.

There are areas in which the two propulsion lines adopt different transmission ratios, especially in the torque range between 0 and 30% and in the speed range between 0 and 40 km/h, i.e. in the area close to the origin of the axes. Under these conditions, one transmission line can adopt the first transmission ratio, while the other adopts the second transmission ratio.

This fact is justified by a different distribution of the driving torque between the two propulsion lines in order to minimize both electrical and mechanical losses.

Figure 3 shows the torque split between the two transmission lines. In particular, the diagram is drawn for the first motor M1, therefore, the torque delivered by the second motor M2 of the second propulsion line corresponds to the torque complementary to that required by the first motor M1.

In the same areas where the two propulsion lines adopt the same transmission ratio, they participate equally in the delivery of the motor torque. Instead, where percentage values of 0, 10, 15, 25% are indicated, it means that the first motor delivers 0 or 10, 15, 25% of the required torque, while the second motor M2 delivers respectively and complementarily 100, 90, 85, 75% of the required torque, i.e. the complementary value.

At the same time, the first propulsion line, which delivers less torque than the second propulsion line, implements a higher gear ratio.

This fact leads to optimizing the overall performance of the propulsion system. The discriminating factor for choosing the distribution of the torque between the propulsion lines and the transmission ratios is always the minimization of the sum of the dissipated powers.

More specifically, when the required torque is relatively low, for example under a threshold variable and function of the vehicle speed, the first propulsion line is completely disconnected by opening the clutch C1. This fact leads to several benefits:
- firstly, it allows the second motor M2, which remains operational, to work at an optimal operating point, and
- secondly, the electromagnetic weakening losses are also eliminated that would occur if one motor is powered, keeping the other mechanically connected to the driving axle.

In fact, it is planned to adopt permanent magnet electric motors. This fact involves on the one hand having a high specific power, but on the other hand the generation of counter-electromotive force, when the motor is driven into rotation and power disconnected. In fact, this counter-electromotive force involves the generation of a resistant torque, which causes a reduction in the efficiency of the propulsion system.

To overcome this resisting torque, it is possible to inject current along the so-called weakening axis, to demagnetize the motor in order to keep the induced voltage across the motor under control. This leads to an increase in the dissipated electrical power.

It is worth highlighting that for low torque delivered, in the diagram of figures 1 and 3, an approximately linear curve is represented that defines the boundary between two contiguous areas that provide for the implementation of the second gear or the "Disengagement" disconnection of the first line L1 of propulsion in figure 1 and the delivery of 50% and 0% of the motor torque by the propulsion line L1 in figure 3.

With reference to Figure 3, the table, as a function of a torque required from the propulsion system and a rotation speed of the driving axle X, returns a distribution value of the torque required between the first and second lines and provides
- a first zone Z1 contiguous with the axis of the required torque, the torque required by the propulsion system is equally divided between said first and second propulsion lines;
- a second zone Z2 contiguous with the axis of the rotation speed of the driving axle, the torque required by the propulsion system is generated only by one of the two propulsion lines, while the other is deactivated and disconnected from the driving axle;
- a third zone Z3 contiguous with the second zone, the torque required by the propulsion system is equally divided between said first and second propulsion lines;
- a fourth zone Z4 delimited by two curves that originate in the origin of the axes, the torque required by the propulsion system is generated unevenly between the two propulsion lines in order to minimize the electrical and mechanical losses of the propulsion system.

It is evident that for particular types of electric motors or transmissions, figures 1 - 3 may vary, albeit slightly. More specifically, in the case of more than two transmission ratios, the curves would change in the central area, ie proximal to the origin of the axes, but the concept of "disengagement" of the area Z2 remains unchanged.

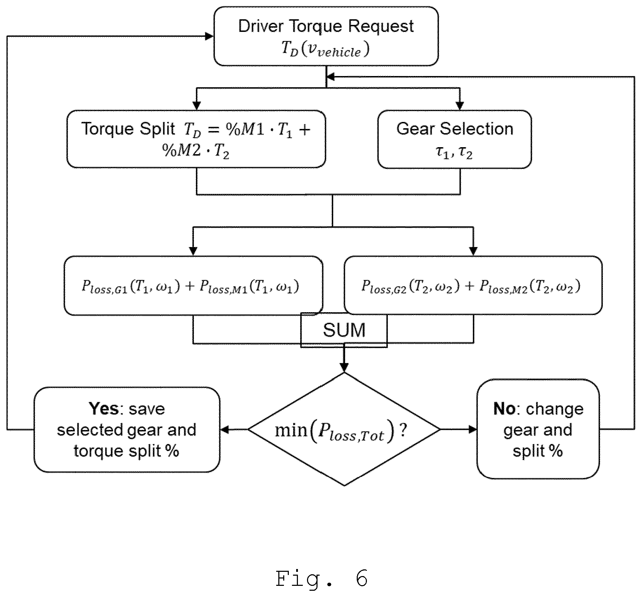

Figure 6 shows a preferred flow chart for generating the "look up tables" of Figures 1 - 3.

It is worth noting that figures 1 - 3 represent diagrams and at the same time look up tables (or simply tables).

It is important to note that in all the tables, the ordinate axis is represented by the torque requested to the propulsion system.

The required torque varies from 0 to 100% with a predetermined pitch M, for example by one percentage point. For each value of the required torque, all the possible distributions R of the torque between the two propulsion lines are considered, for example 0/100, 1/99, 2/98... etc. It is evident that once the 50/50 split ratio is reached, by virtue of the fact that the two propulsion lines are identical to each other, the process stops starting again with another required torque value TD until all possible torque values,required to the propulsion system from 0 to 100%, have been scanned.

For each of the distribution values R in which both propulsion lines are operational, all possible combinations of transmission ratios are evaluated. When each gearbox has a number N of only 2 transmission ratios, the permutations P are 4, so there are a total of 49 x 4 + 1 x 2 combinations. In general, the C number of combinations are: $\left\{\left[\left(M/2-1\right)\times 4\right]+\left(1\times N\right)\right\} .$

For each of the C combinations, the losses on both propulsion lines are calculated, both of a mechanical nature P_{loss,G}, and of an electrical nature P_{loss,M}.

It is evident that the losses depend on the speed of rotation of the propulsion line. Therefore, these values are obtained for a predetermined number S of discrete vehicle speed values which correspond to the rotation speeds ω1 and ω2 of the individual propulsion lines L1 and L2.

Of all the aforementioned values, the one that minimizes the sum of the losses on the entire propulsion system as the vehicle speed varies, is calculated for each speed value.

Through the method just described, the tables of figures 1 - 3 are produced.

The method can be summarized as follows:
- for each required torque value,
- for each value of rotation speed of the towing axle,
- identification of a predetermined number of distribution ratios of the required torque between the two propulsion lines, all the possible permutations (P) due to the transmission ratios of the two propulsion lines are considered, then
- calculation of mechanical and electrical losses e
- memorization of the permutation which allows to minimize the sum of mechanical and electrical losses.

The calculation of the mechanical losses is more easily achievable when the two gearboxes are at discrete ratios comprising two pairs of gears activated alternately. A planetary gear train can have two gear ratios, but the calculation of mechanical losses is much more complex and sometimes unreliable.

Figure 5 shows a logical-functional diagram of the propulsion system object of the present invention.

The signal relating to the torque required by the driver is acquired by means of a tilt sensor (not shown), associated with the accelerator pedal P. An speed sensor SS is associated with the X axle to measure the speed of the vehicle. The signals generated by the tilt sensor and the speed sensor are sent to a processing unit ECU (Electronic control Unit), operatively connected to said sensors. The processing unit, using the tables in figures 1 - 3, briefly indicated as "Look-up Table", calculates the partitioning of the torque between the two propulsion lines L1 and L2 (figure 3) and the transmission ratios (figures 1 and 2) of both propulsion lines.

In figure 5, the block DTR indicates the calculation of the torque required by the propulsion system based on the inclination of the accelerator pedal. Therefore, DTR * %M1 indicates the portion of torque that must be delivered by the first propulsion line L1, while DTR * %M2 indicates the remaining portion of torque that must be delivered by the second propulsion line L2. Evidently, DTR * M2 = 1 - DTR * M1.

Furthermore, the processing unit, using the diagrams in Figures 1 and 2, selects the gear to be used in the G1 and G2 gearboxes, or selects the disconnection of one of the propulsion lines by disengaging the relative engagement. From a hardware point of view, the output shafts of the two propulsion lines L1, L2 converge on the same driving axle X. In particular, the axle includes a central differential DF from which the drive shafts that drive the wheels W1 and W2 depart.

A preferred aspect of the present invention is to perform the following steps:
- distribution of torque between the two propulsion lines;
- for each propulsion line, based on the torque demand and vehicle speed, the gear ratio or disconnection is selected. The above steps can be performed in the same succession of listing or simultaneously.

According to a preferred aspect of the invention, the diagram of Figure 1 is temporarily attributed alternately to the first propulsion line L1 and to the second propulsion line L2. This fact ensures that the transmission lines are subject to the same wear and thermal stress.

When the processing unit calculates a new distribution of motor torque, based on a variation in the inclination of the accelerator pedal and/or the speed of the vehicle, it sends new instructions to the propulsion lines.

According to a preferred variant of the invention, when, following a variation of the control signals, it is provided that both propulsion lines have to change the relative transmission ratio, then priority is given to the propulsion line which has a lower available motor torque and then the propulsion ratio is changed on the other propulsion line. Preferably, during the gear change of the propulsion line that first performs the gear change, the other propulsion line delivers the entire drive torque required to the propulsion system, possibly saturated to the maximum torque that can be delivered by the same.

This gearshift control strategy guarantees reduced discomfort for the driver.

The present invention can be advantageously carried out by means of a computer program which comprises coding means for carrying out one or more steps of the method, when this program is executed on a computer. Therefore it is intended that the scope of protection extends to said computer program and further to computer readable means comprising a recorded message, said computer readable means comprising program coding means for carrying out one or more steps of the method. , when said program is run on a computer.

Implementation variants are possible to the non-limiting example described, without however departing from the scope of protection of the present invention, including all the equivalent embodiments for a person skilled in the art, as defined by the content of the appended claims.

From the above description, the person skilled in the art is able to realize the object of the invention without introducing further construction details.

## Claims

1. Electric propulsion system (S) comprising a first (L1) and a second (L2) propulsion line, operatively connectable individually to a common driving axle (X), each propulsion line comprising
- an electric motor (M1, M2),
- a gearbox (G1, G2) including at least two gear ratios (1st Gear, 2nd Gear),
- a clutch (C1, C2) to connect/disconnect the related propulsion line from the driving axle (X),
the system comprising processing means (ECU) configured to distribute a requested torque (TD) between said first and second propulsion lines and to select, for each propulsion line, a relating gear ratio, wherein said processing means are configured to disconnect, under propulsion conditions by the driving axle, one of said first and second propulsion lines to minimize a sum of the mechanical and electrical losses of the system propulsion; the system being **characterized in that** said processing means comprise storage means in which one or more look up tables are stored which are arranged to return a distribution ratio of the requested torque between the first and second propulsion lines and a relative gear ratio as a function of the requested torque and the speed of rotation of the driving axle (X).

2. System according to claim 1, wherein, when it is requested to cause a variation in the gear ratio on both propulsion lines, said processing means are configured to control said variation first in the propulsion line which has less deliverable drive torque and subsequently, variation of the gear ratio of the propulsion line which has greater deliverable drive torque.

3. System according to claim 2, wherein during said variation in the gear ratio on both propulsion lines, said processing means are configured to interrupt the delivery of torque to the propulsion line which performs the variation in the gear ratio by commanding the other propulsion line to the deliver the entire requested drive torque or the maximum deliverable drive torque, when the requested torque (TD) exceeds the maximum deliverable drive torque by the other propulsion line.

4. System according to claim 1 or 2, wherein said storage means comprise a first table which, as a function of a torque requested to the propulsion system and a rotation speed of the driving axle (X), returns a value of distribution of the requested torque between the first and second propulsion lines and wherein said table is arranged so that in
- a first zone (Z1) contiguous with an axis of the requested torque, the torque requested to the propulsion system is equally divided between said first and second propulsion lines;
- a second zone (Z2) contiguous with an axis of the rotation speed of the driving axle, the torque requested to the propulsion system is supplied only by one of the two propulsion lines, while the other propulsion line is deactivated and disconnected from the driving axle;
- a third zone (Z3) contiguous with the second zone, the torque requested to the propulsion system is equally divided between said first and second propulsion lines;
- a fourth zone (Z4) delimited by two approximately linear curves that originate in the origin of the axles, the torque requested to the propulsion system is delivered differently between the two propulsion lines in order to minimize the electrical and mechanical losses of the propulsion system.

5. System according to claim 4, wherein said storage means comprise a second table relating to the first propulsion line and a third table relating to the second propulsion line, in which, depending on the distribution of the requested torque and the rotation speed of the driving axle returns the gear ratio of the relating gearbox (G1, G2).

6. Method for generating a torque distribution and gear ratio selection scheme for each of the propulsion lines of the propulsion system according to any one of claims 1 - 5, wherein,
- for each requested torque value,
- for each value of rotation speed of the driving axle,
. identification of a predetermined number of distribution ratios of the requested torque between the two propulsion lines, considering all the possible permutations (P) due to the gear ratios of the two propulsion lines, then
. calculation of mechanical and electrical losses
. storing of the permutation which allows to minimize the sum of mechanical and electrical losses.

7. Control method of an electric propulsion system (S) comprising a first (L1) and a second (L2) propulsion line, operably connectable to a driving axle (X), each propulsion line comprising
- an electric motor (M1, M2),
- a gearbox (G1, G2) including at least two gear ratios (1st Gear, 2nd Gear)
- a coupling (C1, C2) to connect/disconnect the relating propulsion line of the driving axle (X),
the method comprising the step of distributing a requested torque (TD) between said first and second propulsion lines and of selecting, for each propulsion line, a relating gear ratio according to the distribution scheme identified through the method of claim 6.

## Patentansprüche

1. Elektrisches Antriebssystem (S) mit einer ersten (L1) und einer zweiten (L2) Antriebsleitung, die einzeln und operativ an eine gemeinsame Antriebsachse (X) angeschlossen und mit dieser verbunden sind, wobei jede Antriebsleitung umfasst:
- einen Elektromotor (M1, M2),
- ein Getriebe (G1, G2) mit mindestens zwei Übersetzungsverhältnissen (1. Gang, 2. Gang),
- eine Kupplung (C1, C2) zum Verbinden/Trennen der jeweiligen Antriebsleitung von der Antriebsachse (X),
wobei das System umfasst eine Steuereinheit (ECU), die so konfiguriert ist, dass sie zur Verteilung eines erforderlichen Drehmoments (TD) zwischen der ersten und der zweiten Antriebsleitung sowie zur Auswahl des entsprechenden Übersetzungsverhältnisses für jede Antriebsleitung dient, wobei die Steuereinheit ist so konfiguriert, dass sie unter Antriebsachsenbedingungen eine der zwei ersten und zweiten Antriebsleitungen trennt, um eine Summe der mechanischen und elektrischen Verluste des Antriebssystems zu minimieren; wobei das System zeichnet sich dadurch aus, dass die Verarbeitungseinrichtung eine Speichereinheit umfasst, in der eine oder mehrere Steuertabellen gespeichert sind,
wobei diese sind so angeordnet, dass sie in Abhängigkeit vom erforderlichen Drehmoment und der Drehzahl der Antriebsachse (X) ein erforderliches Drehmomentverteilungsverhältnis zwischen der ersten und zweiten Antriebsleitung sowie einen entsprechenden Drehzahlbereich zurückgeben.

2. System nach Anspruch 1, wobei die Verarbeitungseinrichtung, wenn eine Änderung des Übersetzungsverhältnisses an den beiden Antriebsleitungen erforderlich ist, zunächst die Änderung an der Antriebsleitung mit dem niedrigeren und anschließend die Änderung an der Antriebsleitung mit dem höheren Motordrehmoment steuert.

3. System nach Anspruch 2, wobei die Verarbeitungseinrichtung während der Änderung des Übersetzungsverhältnisses an den beiden Antriebssträngen die Drehmomentzufuhr zum Antriebsstrang, der die Änderung des Übersetzungsverhältnisses durchführt, unterbricht, indem sie den anderen Antriebsstrang anweist, das volle erforderliche oder das maximal zulässige Antriebsdrehmoment zu liefern, sobald das erforderliche Drehmoment (TD) das maximal zulässige Antriebsdrehmoment des anderen Antriebsstrangs überschreitet.

4. System nach Anspruch 1 oder 2, wobei die Speichereinrichtung eine erste Tabelle umfasst, die in Abhängigkeit vom vom Antriebssystem benötigten Drehmoment und der Drehzahl der Antriebsachse (X) einen Wert für die Verteilung des benötigten Drehmoments zwischen dem ersten und dem zweiten Antriebsstrang erneut ausgibt, und wobei die Tabelle so angeordnet ist, dass in:
- einer ersten Zone (Z1), die an eine Achse des benötigten Drehmoments angrenzt, das benötigte Drehmoment des Antriebssystems gleichmäßig auf den ersten und den zweite Antriebsstrang verteilt wird;
- einer zweiten Zone (Z2), die an eine Drehzahlachse der Antriebsachse angrenzt, das vom Antriebssystem benötigte Drehmoment nur von einer der beiden Antriebssträngen bereitgestellt wird, während der andere Antriebsstrang deaktiviert und von der Antriebsachse getrennt ist;
- einer dritten Zone (Z3), die an die zweite Zone angrenzt, das vom Antriebssystem benötigte Drehmoment gleichmäßig auf den ersten und den zweiten Antriebsstrang verteilt wird;
- einer vierten Zone (Z4), die durch zwei annähernd lineare Kurven begrenzt wird, die von den Achsenursprüngen ausgehen, wobei das vom Antriebssystem benötigte Drehmoment wird auf die beiden Antriebsstränge unterschiedlich verteilt, um die elektrischen und mechanischen Verluste im Antriebssystem zu minimieren.

5. System nach Anspruch 4, wobei die Speichereinrichtung eine zweite Tabelle für den ersten Antriebsstrang und eine dritte Tabelle für den zweiten Antriebsstrang umfasst, in der in Abhängigkeit von der erforderlichen Drehmomentverteilung und der Drehzahl der Antriebsachse das Übersetzungsverhältnis des jeweiligen Getriebes (G1, G2) gespeichert wird.

6. Verfahren zur Erzeugung eines Drehmomentverteilungsschemas und zur Auswahl des Übersetzungsverhältnisses für jeden Antriebsstrang des Antriebssystems gemäß einem der Ansprüche 1 bis 5, wobei:
- für jeden erforderlichen Drehmomentwert,
- für jede Drehzahl der Antriebsachse,
• die Ermittlung einer vorbestimmten Anzahl erforderlicher Drehmomentverteilungsverhältnisse zwischen den beiden Antriebssträngen unter Berücksichtigung aller möglichen Permutationen (P) aufgrund der Übersetzungsverhältnisse der beiden Antriebsstränge, anschließend:
• Berechnung der mechanischen und elektrischen Verluste,
• Speicherung der Permutation, die erlaubt, die Summe der mechanischen und elektrischen Verluste zu minimieren.

7. Verfahren zur Steuerung eines elektrischen Antriebssystems (S) mit einem ersten (L1) und einem zweiten (L2) Antriebsstrang, die mit einer Antriebsachse (X) verbunden werden können, wobei jeder Antriebsstrang umfasst:
- einen Elektromotor (M1, M2),
- ein Getriebe (G1, G2) mit mindestens zwei Übersetzungsverhältnissen (1. Gang, 2. Gang),
- eine Kupplung (C1, C2) zum Verbinden/Trennen des jeweiligen Antriebsstrangs mit der Antriebsachse (X),
wobei das Verfahren umfasst den Schritt, ein erforderliches Drehmoment (TD) auf den ersten und zweiten Antriebsstrang zu verteilen und für jeden Antriebsstrang ein entsprechendes Übersetzungsverhältnis gemäß dem durch das Verfahren des Anspruchs 6 identifizierten Verteilungsschema auszuwählen.

## Revendications

1. Système de propulsion électrique (S) comprenant une première (L1) et une deuxième (L2) ligne de propulsion, connectables individuellement et de sorte opérative à un essieu moteur commun (X), chaque ligne de propulsion comprenant
- un moteur électrique (M1, M2),
- une boîte de vitesses (G1, G2) comprenant au moins deux rapports de vitesse (1ère vitesse, 2ème vitesse)
- un embrayage (C1, C2) pour connecter/déconnecter la ligne de propulsion correspondante de l'essieu moteur (X),
le système comprenant des moyens de traitement (ECU) configurés pour répartir un couple demandé (TD) entre lesdites première et deuxième lignes de propulsion et pour sélectionner, pour chaque ligne de propulsion, un rapport de transmission correspondant, dans lequel lesdits moyens de traitement sont configurés pour déconnecter l'une des première et deuxième lignes de propulsion en conditions de propulsion par ledit essieu moteur, afin de minimiser une somme des pertes mécaniques et électriques du système de propulsion ;
le système étant **caractérisé en ce que** les dits moyens de traitement comprennent des moyens de stockage, dans lesquels une ou plusieurs tables de contrôle sont stockées et arrangées pour ramener un rapport de distribution du couple demandé entre les première et deuxième lignes de propulsion et un respectif intervalle de vitesse en fonction du couple demandé et de la vitesse de rotation de l'essieu moteur (X).

2. Système selon la revendication 1, dans lequel, lorsqu'il est demandé de provoquer une variation du rapport de transmission sur les deux lignes de propulsion, lesdits moyens de traitement sont configurés pour contrôler d'abord ladite variation sur la ligne de propulsion qui a le couple moteur délivrable le plus faible, puis la variation du rapport de transmission de la ligne de propulsion qui a le couple moteur délivrable le plus élevé.

3. Système selon la revendication 2, dans lequel, pendant ladite variation du rapport de transmission sur les deux lignes de propulsion, lesdits moyens de traitement sont configurés pour interrompre la fourniture de couple à la ligne de propulsion qui effectue la variation du rapport de transmission en commandant à l'autre ligne de propulsion de fournir la totalité du couple d'entraînement demandé ou le couple d'entraînement maximal pouvant être fourni, lorsque le couple demandé (TD) dépasse le couple d'entraînement maximal pouvant être fourni par l'autre ligne de propulsion.

4. Système selon la revendication 1 ou 2, dans lequel lesdits moyens de stockage comprennent une première table qui, en fonction du couple demandé au système de propulsion et de la vitesse de rotation de l'essieu moteur (X), renvoie une valeur de répartition du couple demandé entre les première et deuxième lignes de propulsion, et dans lequel ladite table est agencée de sorte que dans
- une première zone (Z1) contiguë à un axe du couple demandé, le couple demandé au système de propulsion est réparti de manière égale entre lesdites première et deuxième lignes de propulsion ;
- une deuxième zone (Z2) contiguë à un axe de vitesse de rotation de l'essieu moteur, le couple demandé au système de propulsion n'est fourni que par l'une des deux lignes de propulsion, tandis que l'autre ligne de propulsion est désactivée et déconnectée de l'essieu moteur ;
- une troisième zone (Z3) contiguë à la deuxième zone, le couple demandé au système de propulsion est réparti de manière égale entre lesdites première et deuxième lignes de propulsion ;
- une quatrième zone (Z4) délimitée par deux courbes approximativement linéaires qui prennent naissance à l'origine des essieux, le couple demandé au système de propulsion est délivré différemment entre les deux lignes de propulsion afin de minimiser les pertes électriques et mécaniques du système de propulsion.

5. Système selon la revendication 4, dans lequel lesdits moyens de stockage comprennent une deuxième table relative à la première ligne de propulsion et une troisième table relative à la deuxième ligne de propulsion, dans laquelle, en fonction de la distribution du couple demandé et de la vitesse de rotation de l'essieu moteur, renvoie le rapport de transmission de la boîte de vitesses correspondante (G1, G2).

6. Méthode de génération d'un schéma de répartition du couple et de sélection du rapport de transmission pour chacune des lignes de propulsion du système de propulsion selon l'une quelconque des revendications 1 à 5, dans lequel,
- pour chaque valeur de couple demandée,
- pour chaque valeur de vitesse de rotation de l'essieu moteur,
• identification d'un nombre prédéterminé de rapports de répartition du couple demandé entre les deux lignes de propulsion, en tenant compte de toutes les permutations possibles (P) dues aux rapports de transmission des deux lignes de propulsion, puis
• calcul des pertes mécaniques et électriques
• stockage de la permutation qui permet de minimiser la somme des pertes mécaniques et électriques.

7. Procédé de commande d'un système de propulsion électrique (S) comprenant une première (L1) et une deuxième (L2) ligne de propulsion, raccordables opérationnellement à un essieu moteur (X), chaque ligne de propulsion comprenant
- un moteur électrique (M1, M2),
- une boîte de vitesses (G1, G2) comprenant au moins deux rapports de vitesse (1ère vitesse, 2ème vitesse)
- un accouplement (C1, C2) pour connecter/déconnecter la ligne de propulsion correspondante de l'essieu moteur (X),
la méthode comprenant l'étape de répartition d'un couple demandé (TD) entre lesdites première et deuxième lignes de propulsion et de sélection, pour chaque ligne de propulsion, d'un rapport de transmission correspondant selon le schéma de répartition identifié par le procédé de la revendication 6.
